(19) **Europäisches Patentamt**

**European Patent Office**

**Office européen des brevets**

(11) **EP 1 169 561 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **00934903.6**

(22) Anmeldetag: **12.04.2000**

(51) Int Cl.[7]: **F02D 41/40**, F02D 41/30, F02D 37/02

(86) Internationale Anmeldenummer:
**PCT/DE2000/001146**

(87) Internationale Veröffentlichungsnummer:
**WO 2000/061934 (19.10.2000 Gazette 2000/42)**

(54) **VERFAHREN ZUM BETREIBEN EINER BRENNKRAFTMASCHINE**

METHOD FOR OPERATING AN INTERNAL COMBUSTION ENGINE

PROCEDE POUR FAIRE FONCTIONNER UN MOTEUR A COMBUSTION INTERNE

(84) Benannte Vertragsstaaten:
**DE ES FR IT**

(30) Priorität: **13.04.1999 DE 19916525**

(43) Veröffentlichungstag der Anmeldung:
**09.01.2002 Patentblatt 2002/02**

(73) Patentinhaber: **ROBERT BOSCH GMBH**
**70442 Stuttgart (DE)**

(72) Erfinder:
• **BOCHUM, Hansjoerg**
**Novi, MI 48377 (US)**
• **BUCHHOLZ, Dieter**
**D-74343 Sachsenheim (DE)**

(56) Entgegenhaltungen:
**EP-A- 0 849 460**    **WO-A-99/20882**
**DE-A- 19 612 150**    **DE-A- 19 739 786**

## Beschreibung

Stand der Technik

Die Erfindung betrifft ein Verfahren zum Betreiben einer Brennkraftmaschine insbesondere eines Kraftfahrzeugs, bei dem Kraftstoff in einer ersten Betriebsart während einer Verdichtungsphase und in einer zweiten Betriebsart während einer Ansaugphase direkt in einen von einem Kolben begrenzten Brennraum eingespritzt wird, und bei dem der in den Brennraum eingespritzte Kraftstoff entzündet wird. Des weiteren betrifft die Erfindung eine Brennkraftmaschine insbesondere für ein Kraftfahrzeug, mit einem Einspritzventil, mit dem Kraftstoff in einer ersten Betriebsart während einer Verdichtungsphase und in einer zweiten Betriebsart während einer Ansaugphase direkt in einen von einem Kolben begrenzten Brennraum einspritzbar ist, mit einer Zündkerze, mit der der in den Brennraum eingespritzte Kraftstoff entzündbar ist, und mit einem Steuergerät, mit dem das Einspritzventil und die Zündkerze steuerbar sind.

Nach der DE 197 39 786 A wird eine homogene bzw. geschichtete Verbrennung je nach Betriebsbedingungen angesteuert durch Direkteinspritzung während des Ansaugtakts bzw während der Kompression, dabei wird die Einspritzung immer programmgemäß beendet bevor der Druck im Brennraum den Einspritzdruck übersteigt und bevor die Zündung durch die Zündkerze 6 erfolgt. Dabei wird ein Einspritzendwinkel festgelegt, der offensichtlich aus den vorher festgelegten Zündwinkeln, zugeordnet den Betriebszuständen und dem (berechneten oder gemessenen) Brennraumdruck bestimmt worden ist.

Derartige Systeme zur direkten Einspritzung von Kraftstoff in den Brennraum einer Brennkraftmaschine sind allgemein bekannt. Es wird dabei als erste Betriebsart ein sogenannter Schichtbetrieb und als zweite Betriebsart ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt.

Im Schichtbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, daß keine gleichmäßige Verteilung des Kraftstoffs in dem Brennraum mehr erfolgen kann. Der Vorteil des Schichtbetriebs liegt darin, daß mit einer sehr geringen Kraftstoffmasse die anliegenden kleineren Lasten von der Brennkraftmaschine ausgeführt werden können. Größere Lasten können allerdings nicht durch den Schichtbetrieb erfüllt werden. Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird.

In beiden Betriebsarten, also im Schichtbetrieb und im Homogenbetrieb, wird der Einspritzwinkel und die Einspritzdauer des einzuspritzenden Kraftstoffs von einem Steuergerät in Abhängigkeit von einer Mehrzahl von Parametern auf einen im Hinblick auf Kraftstoffeinsparung, Schadstoffreduzierung und dergleichen optimalen Wert gesteuert und/oder geregelt. Diese Steuerung und/oder Regelung gewährleistet dabei, daß unter normalen Betriebsbedingungen das Einspritzventil geschlossen ist, wenn der eingespritzte Kraftstoff entzündet wird.

Es ist jedoch möglich, daß diese normalen Bedingungen beispielsweise aufgrund einer Fehlfunktion nicht mehr gegeben sind. So ist es möglich, daß die Hochdruckpumpe defekt ist, so daß der Kraftstoff nur noch mit dem von der elektrischen Kraftstoffpumpe erzeugten Raildruck über das Einspritzventil in den Brennraum eingespritzt werden kann.

In diesem Fall besteht die Gefahr, daß das Einspritzventil noch geöffnet ist, wenn die Entzündung des Kraftstoffs erfolgt. Dies würde zu einer Schädigung des Einspritzventils führen.

Aufgabe der Erfindung ist es, ein Verfahren zum Betreiben einer Brennkraftmaschine zu schaffen, mit dem ein problemloser Betrieb der Brennkraftmaschine möglich ist.

Diese Aufgabe wird bei einem Verfahren der eingangs genannten Art bzw. bei einer Brennkraftmaschine der eingangs genannten Art erfindungsgemäß gelöst durch die Merkmale gemäß Anspruch 1 bzw. 7.

Auf diese Weise wird gewährleistet, daß das Einspritzventil in jedem Fall geschlossen ist, wenn der Kraftstoff mittels der Zündkerze entzündet wird. Es wird damit sicher ein frühzeitiges Verkoken des Einspritzventils verhindert. Die Funktionsfähigkeit und die Lebensdauer des Einspritzventils wird dadurch wesentlich erhöht.

Bei einer vorteilhaften Weiterbildung der Erfindung, bei der der auf den einzuspritzenden Kraftstoff ausgeübte Druck ermittelt wird, wird der in dem Brennraum vorhandene Druck ermittelt, und es wird dann in jedem Betriebszustand er Brennkraftmaschine die Einspritzung des Kraftstoffs beendet, bevor oder sobald der Druck in dem Brennraum größer wird als der auf den Kraftstoff ausgeübte Druck.

Spätestens in demjenigen Zeitpunkt, in dem der Druck in dem Brennraum größer wird als der auf den Kraftstoff ausgeübte Druck, wird das Einspritzventil geschlossen. Auf diese Weise wird erreicht, daß kein Kraftstoff/Luft-Gemisch aus dem Brennraum in das Einspritzventil zurückgeblasen werden kann. Es wird damit die Funktionsfähigkeit des Kraftstoffaufbereitungssystems erhalten und ein Aussetzen oder dergleichen der Brennkraftmaschine vermieden.

Besonders vorteilhaft ist es, wenn der früher liegende der beiden Abbruchwinkel mit dem aktuellen Drehwinkel der Kurbelwelle verglichen wird, und wenn, sobald der aktuelle Drehwinkel der Kurbelwelle gleich oder größer ist als der ausgewählte frühere Abbruchwinkel, ein geöffnetes Einspritzventil geschlossen wird. Auf diese Weise wird in jedem Fall gewährleistet, daß kein Einspritzventil noch geöffnet ist, wenn der eingespritzte Kraftstoff in dem Brennraum entzündet wird, oder wenn der Brennraumdruck größer wird als der auf den Kraftstoff einwirkende Druck.

Eine vorteilhafte Ausgestaltung der Erfindung ist durch die fortlaufende Wiederholung des erfindungsgemäßen Verfahrens in insbesondere gleichen Zeitabständen oder Winkelabständen gekennzeichnet. Damit wird gewährleistet, daß das Verfahren völlig unabhängig von allen Betriebszuständen der Brennkraftmaschine durchgeführt wird, so daß in jedem Betriebszustand gewährleistet ist, daß keine Schädigung der Einspritzventile erfolgt.

Von besonderer Bedeutung ist die Realisierung des erfindungsgemäßen Verfahrens in der Form eines elektrischen Steuermediums, gemäß Anspruch 6. Dabei ist auf dem elektrischen Speichermedium ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem elektrischen Speichermedium abgespeichertes Programm realisiert, so daß dieses mit dem Programm versehene Speichermedium in gleicher Weise die Erfindung darstellt wie das Verfahren, zu dessen Ausführung das Programm geeignet ist.

Figur 1    zeigt ein schematisches Blockschaltbild eines Ausführungsbeispiels einer erfindungsgemäßen Brennkraftmaschine eines Kraftfahrzeugs, und

Figur 2    zeigt ein schematisches Blockschaltbild eines Ausführungsbeispiels eines erfindungsgemäßen Verfahrens zum Betreiben der Brennkraftmaschine der Figur 1.

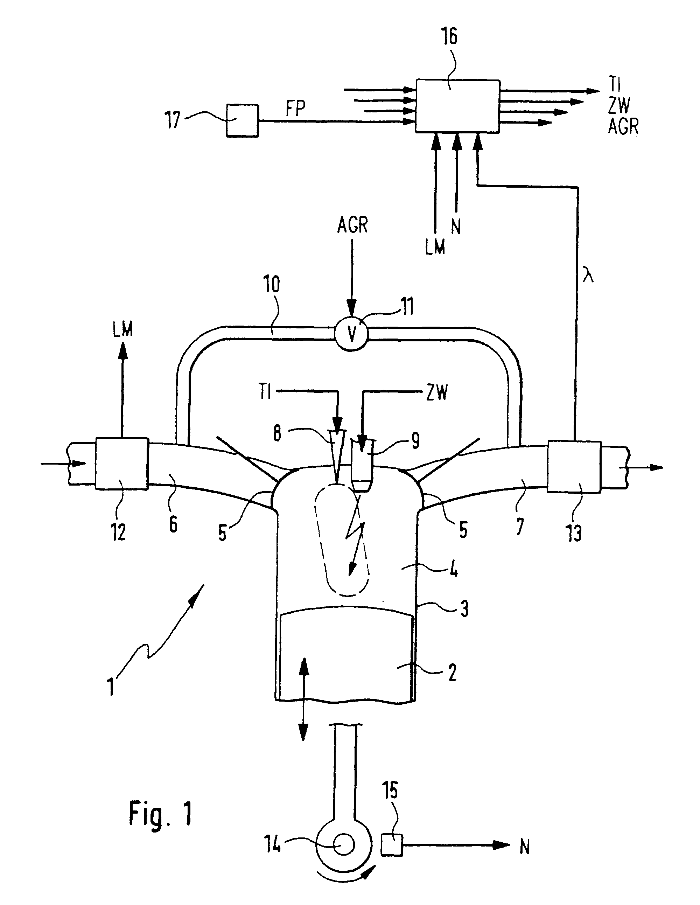

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein mit einem Signal TI ansteuerbares Einspritzventil 8 und eine mit einem Signal ZW ansteuerbare Zündkerze 9 zugeordnet. Das Abgasrohr 7 kann über eine Abgasrückführleitung 10 und ein mit einem Signal AGR steuerbares Abgasrückführventil 11 mit dem Ansaugrohr 6 verbunden sein.

Das Ansaugrohr 6 kann mit einem Luftmassensensor 12 und das Abgasrohr 7 kann mit einem Lambda-Sensor 13 versehen sein.

Der Luftmassensensor 12 mißt die Sauerstoffmasse der dem Ansaugrohr 6 zugeführten Frischluft und erzeugt in Abhängigkeit davon ein Signal LM. Der Lambda-Sensor 13 mißt den Sauerstoffgehalt des Abgases in dem Abgasrohr 7 und erzeugt in Abhängigkeit davon ein Signal $\lambda$.

In einer ersten Betriebsart, dem Schichtbetrieb der Brennkraftmaschine 1, wird der Kraftstoff von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich unmittelbar vor dem oberen Totpunkt des Kolbens 2. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird der Kraftstoff von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach .wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb, wie auch im Homogenbetrieb wird durch den angetriebenen Kolben eine Kurbelwelle 14 in eine Drehbewegung versetzt, über die letztendlich die Räder des Kraftfahrzeugs angetrieben werden. Der Kurbelwelle 14 ist ein Drehzahlsensor 15 zugeordnet, der in Abhängigkeit von der Drehbewegung der Kurbelwelle 14 ein Signal N erzeugt.

Der Kraftstoff wird im Schichtbetrieb und im Homogenbetrieb unter einem hohen Druck über das Einspritzventil 8 in den Brennraum 4 eingespritzt. Zu diesem Zweck ist eine elektrische Kraftstoffpumpe und eine Hochdruckpumpe vorgesehen, wobei letztere von der Brennkraftmaschine 1 oder elektromotorisch angetrieben sein kann. Die elektrische Kraftstoffpumpe erzeugt einen sogenannten Raildruck EKP von mindestens 3 bar und die Hochdruckpumpe erzeugt einen Raildruck HD von etwa 100 bar.

Die im Schichtbetrieb und im Homogenbetrieb von dem Einspritzventil 8 in den Brennraum 4 eingespritzte Kraftstoffmasse wird von einem Steuergerät 16 insbesondere im Hinblick auf einen geringen Kraftstoffverbrauch und/oder eine geringe Schadstoffentwicklung gesteuert und/oder geregelt. Zu diesem Zweck ist das Steuergerät 16 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät 16 ist von Eingangssignalen beaufschlagt, die mittels Sensoren gemessene Betriebsgrößen der Brennkraftmaschine darstellen. Beispielsweise ist das ‚Steuergerät 16 mit dem Luftmassensensor 12, dem Lambdasensor 13 und dem Drehzahlsensor 15 verbunden. Des weiteren ist das Steuergerät 16 mit einem Fahrpedalsensor 17 verbunden, der ein Signal FP erzeugt, das die Stellung eines von einem Fahrer betätigbaren Fahrpedals angibt. Das Steuergerät 16 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 16 mit dem Einspritzventil 8, der Zündkerze 9 und dem Abgasrückführventil 11 verbunden und erzeugt die zu deren Ansteuerung erforderlichen Signale TI, ZW und AGR.

Mit dem Signal TI wird die Einspritzung des in den Brennraum einzuspritzenden Kraftstoffs gesteuert. Diese Einspritzung setzt sich aus einem Einspritzwinkel, bei dem die Einspritzung beginnt, und der Einspritzdauer, die die zeitliche Länge der Einspritzung festlegt, zusammen. Der Einspritzwinkel und die Einspritzdauer werden im Homogenbetrieb aufgrund der hierzu erforderlichen Rechenzeit jeweils vor der Ansaugphase von dem Steuergerät 16 berechnet. Das Steuergerät 16 legt dieser Berechnung den in diesem Zeitpunkt, also vor der Ansaugphase herrschenden Betriebszustand der Brennkraftmaschine zugrunde.

Unter normalen Bedingungen wird der Einspritzwinkel und die Einspritzdauer von dem Steuergerät 16 derart ermittelt, daß das Einspritzventil 8 bereits wieder geschlossen ist, bevor der eingespritzte Kraftstoff mittels der Zündkerze 9 entzündet wird. Ebenfalls wird der Einspritzwinkel und die Einspritzdauer von dem Steuergerät 16 derart ermittelt, daß das Einspritzventil 8 ebenfalls bereits geschlossen ist, wenn der Druck in dem Brennraum 4 aufgrund der Kompression durch den Kolben 2 größer wird als der Druck, unter dem der Kraftstoff über das Einspritzventil 8 in den Brennraum 4 eingespritzt wird.

.Es ist jedoch möglich, daß diese normalen Bedingungen beispielsweise aufgrund einer Fehlfunktion nicht mehr gegeben sind. So ist es möglich, daß die Hochdruckpumpe defekt ist, so daß der Kraftstoff nur noch mit dem von der elektrischen Kraftstoffpumpe erzeugten Raildruck EKP über das Einspritzventil 8 in den Brennraum 4 eingespritzt werden kann. In diesem Fall würde das Steuergerät 16 die Einspritzdauer automatisch verlängern, so daß die Gefahr besteht, daß das Einspritzventil 8 noch geöffnet ist, wenn die Entzündung des Kraftstoffs erfolgt. Dies würde zu einer Schädigung des Einspritzventils 8 führen.

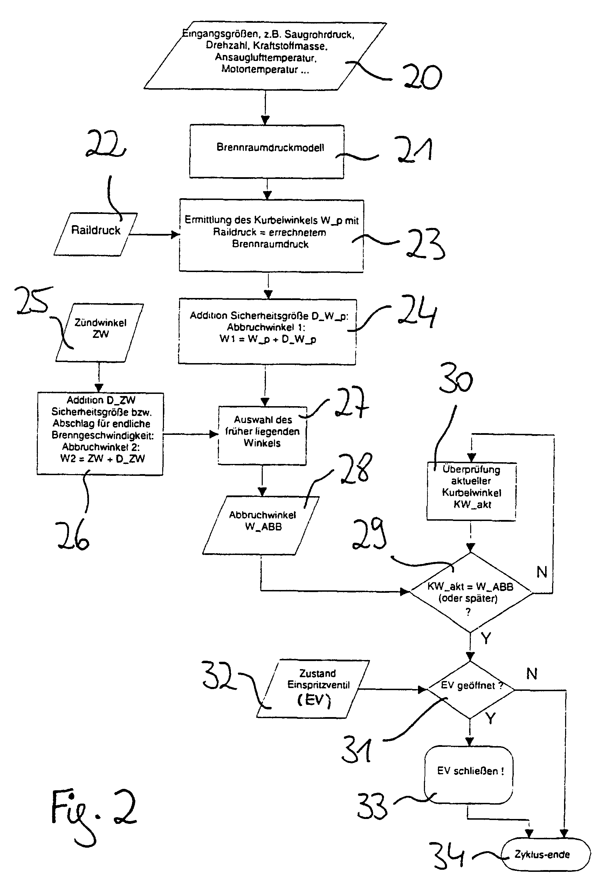

Damit derartige Fälle sicher verhindert werden, wird das anhand der Figur 2 nachfolgend beschriebene Verfahren in allen Betriebszuständen der Brennkraftmaschine 1 von dem Steuergerät 16 durchgeführt.

In Abhängigkeit von einer Mehrzahl von Eingangsgrößen 20 wird mittels eines Brennraumdruckmodells 21 der Druck in dem Brennraum 4 der Brennkraftmaschine 1 in Abhängigkeit von dem Drehwinkel der Kurbelwelle 14 ermittelt. Bei den Eingangsgrößen 20 kann es sich um den Druck in dem Ansaugrohr 6, die Drehzahl N der Brennkraftmaschine 1, die einzuspritzende Kraftstoffmasse, die Temperatur der angesauten Luft, die Temperatur der Brennkraftmaschine 1, und/oder um weitere Betriebsgrößen der Brennkraftmaschine 1 handeln.

Alternativ oder ergänzend ist es möglich, daß dem Brennraum 4 ein Sensor zugeordnet ist, mit dem der Druck in dem Brennraum 4 in Abhängigkeit von dem Drehwinkel der Kurbelwelle 14 meßbar ist.

Mit Hilfe eines Sensors wird derjenige Druck gemessen, mit dem der Kraftstoff von den Einspritzventilen 8 in den Brennraum 4 eingespritzt wird. Hierzu kann beispielsweise ein Drucksensor dem Druckspeicher, dem sogenannten Common Rail, zugeordnet sein, über den die Einspritzventile 8 der Brennkraftmaschine 1 miteinander verbunden sind. Als Ergebnis steht dann der Raildruck 22 zur Verfügung.

In einem Block 23 der Figur 2 wird derjenige Drehwinkel W_p der Kurbelwelle 14 ermittelt, bei dem der von dem Brennraummodell 21 ermittelte Brennraumdruck gleich dem Raildruck 22 ist. Zu diesem Drehwinkel W_p wird in einem Block 24 ein Sicherheitsabstand D_W_p hinzuaddiert, so daß sich ein erster Abbruchwinkel wie folgt ergibt:

$$W1 = W\_p + D\_W\_p$$

Von dem Steuergerät 16 wird, wie erläutert, der Zündwinkel ZW aus anderen Betriebsgrößen der Brennkraftmaschine 1 ermittelt. Dieser Zündwinkel ZW wird in einem Block 25 übernommen, um danach in einem Block 26 einen Sicherheitsabstand D_ZW hinzuzuaddieren. Mit diesem Sicherheitsabstand kann die endliche Brenngeschwindigkeit des entzündeten Kraftstoffs berücksichtigt werden. Insbesondere kann damit berücksichtigt werden, daß aufgrund der endlichen Brenngeschwindigkeit immer noch eine endliche Zeitdauer zur Verfügung stehe, bis die Flammfront das Einspritzventil 8 erreicht und damit einen Schaden an dem geöffneten Einspritzventil 8 hervorrufen kann. Als zweiter Abbruchwinkel ergibt sich damit:

$$W2 = ZW + D\_ZW$$

Mit einem Block 27 wird derjenige der beiden Abbruchwinkel W1 und W2 ausgewählt, der früher liegt. Dieser frühere Winkel wird von einem Block 28 als Abbruchwinkel W_ABB weitergegeben.

In einem Block 29 wird überprüft, ob der aktuelle Drehwinkel KW_akt der Kurbelwelle 14 gleich oder später als der Abbruchwinkel W_ABB ist. Ist dies nicht der Fall, so wird mittels eines Blocks 30 ein neuer aktueller Drehwinkel KW_akt der Kurbelwelle 14 eingelesen, um danach den Vergleich des Blocks 29 zu wiederholen. Diese Schleife der Blöcke 29 und 30 wird so lange durchlaufen, bis im Block 29 der aktuelle Drehwinkel KW_akt gleich oder größer wird als der Abbruchwinkel W_ABB. In diesem Fall wird das Verfahren mit dem Block 31 fortgesetzt.

In einem Block 32 wird der Zustand des bzw. der Einspritzventile 8 abgefragt. Dies kann mittels eines Sensors oder auch mit Hilfe des Steuergeräts 16 erfolgen. Dieser Zustand wird dann von dem Block 32 an den Block 31 weitergegeben.

In dem Block 31 wird abgefragt, ob das bzw. die Einspritzventile 8 geöffnet sind. Ist dies der Fall, so wird von einem Block 33 das bzw. die Einspritzventile 8 sofort geschlossen. Danach wird das Verfahren mit dem Block 34 beendet. Ist hingegen kein Einspritzventil 8 geöffnet, so wird das Verfahren sofort mit dem Block 34 beendet.

Wie erwähnt, wird das vorstehend beschriebene Verfahren in jedem Betriebszustand bzw. in allen Betriebszuständen der Brennkraftmaschine 1 durchgeführt. Das Verfahren ist unabhängig vom Betriebszustand der Brennkraftmaschine 1. Dies kann beispielsweise dadurch erreicht werden, daß das Verfahren in vorgegebenen Zeitabständen durchgeführt wird, ohne daß dabei der Betriebszustand der Brennkraftmaschine 1 berücksichtigt wird. Das Verfahren wird also fortlaufend in allen Betriebszuständen wiederholt. Die Zeitabstände zwischen den einzelnen Durchlaufzyklen sind dabei insbesondere etwa gleich. Anstelle der gleichen Zeitabstände können auch gleiche Winkelabstände z. B. der Kurbelwelle 14 vorgesehen sein.

Das beschriebene Verfahren, mit dem die Einspritzung von Kraftstoff in den Brennraum 4 vor dessen Entzündung beendet wird, kann vorteilhafterweise gezielt ein- und ausgeschaltet werden. Damit kann Rechenzeit in dem Steuergerät 16 eingespart werden. Ebenfalls kann damit bei ausgeschaltetem Verfahren eine Einspritzung von Kraftstoff während der Arbeitsphase der Brennkraftmaschine 1 erfolgen, mit der z.B. ein Katalysator aufgeheizt werden kann.

**Patentansprüche**

1. Verfahren zum Betreiben einer Brennkraftmaschine (1) insbesondere eines Kraftfahrzeugs, bei dem Kraftstoff in einer ersten Betriebsart während einer Verdichtungsphase und in einer zweiten Betriebsart während einer Ansaugphase direkt in einen von einem Kolben (2) begrenzten Brennraum (4) eingespritzt wird, und bei dem der in den Brennraum (4) eingespritzte Kraftstoff entzündet wird, **dadurch gekennzeichnet, dass** ein erster, von dem auf den einzuspritzenden Kraftstoff ausgeübten Druck und dem Druck in dem Brennraum (3) abhängiger Abbruchwinkel (W1) für die Einspritzung ermittelt wird, dass ein zweiter, von dem Zündwinkel (ZW) abhängiger Abbruchwinkel (W2) für die Einspritzung ermittelt wird, und dass der früher liegende der beiden Abbruchwinkel (W1, W2) mit dem aktuellen Drehwinkel (KW_akt) der Kurbelwelle (14) verglichen wird (29).

2. Verfahren nach dem Anspruch 1, **dadurch gekennzeichnet, dass** der erste Abbruchwinkel (W1) für die Einspritzung sich aus dem Drehwinkel (W_p) der Kurbelwelle (14), bei dem der Druck (21) in dem Brennraum (4) gleich oder größer ist als der auf den einzuspritzenden Kraftstoff ausgeübte Druck (Raildruck) (22) ist, und aus einem Sicherheitsabstand (D_W_p) zusammensetzt.

3. Verfahren nach Anspruch 1 oder 2, **dadurch gekennzeichnet, dass** der zweite Abbruchwinkel (W2) für die Einspritzung sich aus dem Zündwinkel (ZW) und einem Sicherheitsabstand (D_ZW) zusammensetzt.

4. Verfahren nach einem der Ansprüche 1 bis 3, **dadurch gekennzeichnet, dass**, sobald der aktuelle Drehwinkel (KW_akt) der Kurbelwelle (14) gleich oder größer ist als der ausgewählte frühere Abbruchwinkel (W_ABB), ein geöffnetes Einspritzventil (8) geschlossen wird (33).

5. Verfahren nach einem der vorstehenden Ansprüche, **gekennzeichnet durch** dessen fortlaufende Wiederholung in insbesondere gleichen Zeitabständen oder Winkelabständen.

6. Elektrisches Steuermedium, insbesondere Read-Only-Memory, zur Verwendung bei einem Verfahren nach einem der Ansprüche 1 bis 5, für ein Steuergerät (16) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 5 geeignet ist.

7. Brennkraftmaschine (1) insbesondere für ein Kraftfahrzeug, mit einem Einspritzventil (8), mit dem Kraftstoff in einer ersten Betriebsart während einer Verdichtungsphase und in einer zweiten Betriebsart während einer Ansaugphase direkt in einen von einem Kolben (2) begrenzten Brennraum (4) einspritzbar ist, mit einer Zündkerze (9), mit der der in den Brennraum (4) eingespritzte Kraftstoff entzündbar ist, und mit einem Steuergerät (16), mit dem das Einspritzventil (8) und die Zündkerze (9) steuerbar sind, **dadurch gekennzeichnet, dass** durch das Steuergerät (16) ein erster, von dem auf den einzuspritzenden Kraftstoff ausgeübten Druck und dem Druck in dem Brennraum (3) abhängiger Abbruchwinkel (W1) für die Einspritzung ermittelt wird, dass durch das Steuergerät (16) ein zweiter, von dem Zündwinkel (ZW) abhängiger Abbruchwinkel (W2) für die Einspritzung ermittelt wird, und dass durch das Steuergerät (16) der früher liegende der beiden Abbruchwinkel (W1, W2) mit dem aktuellen Drehwinkel (KW_akt) der Kurbelwelle (14) verglichen wird (29).

## Claims

1. Method for operating an internal combustion engine (1), in particular of a motor vehicle, in which fuel is injected directly into a combustion chamber (4), which is delimited by a piston (2), during a compression phase in a first operating mode and during an induction phase in a second operating mode, and in which the fuel which has been injected into the combustion chamber (4) is ignited, **characterized in that** a first interrupt angle (W1) for the injection, which is dependent on the pressure exerted on the fuel to be injected and the pressure in the combustion chamber (3), is determined, **in that** a second interrupt angle (W2) for the injection, which is dependent on the ignition angle (ZW), is determined, and **in that** the earlier of the two interrupt angles (W1, W2) is compared (29) with the current rotation angle (KW_akt) of the crankshaft (14).

2. Method according to Claim 1, **characterized in that** the first interrupt angle (W1) for the injection is composed of the rotation angle (W_p) of the crankshaft (14) at which the pressure (21) in the combustion chamber (4) is greater than or equal to the pressure exerted on the fuel to be injected (rail pressure) (22), and of a safety margin (D_W_p).

3. Method according to Claim 1 or 2, **characterized in that** the second interrupt angle (W2) for the injection is composed of the ignition angle (ZW) and a safety margin (D_ZW).

4. Method according to one of Claims 1 to 3, **characterized in that** as soon as the current rotation angle (KW_akt) of the crankshaft (14) is greater than or equal to the selected earlier interrupt angle (W_ABB), an open injection valve (8) is closed (33).

5. Method according to one of the preceding claims, **characterized by** its continual repetition, in particular at regular time intervals or angle intervals.

6. Electrical control medium, in particular read only memory, for use in a method according to one of Claims 1 to 5, for a control unit (16) of an internal combustion engine (1), in particular of a motor vehicle, which stores a program which can run on a computer unit, in particular on a microprocessor, and is suitable for carrying out a method according to one of Claims 1 to 5.

7. Internal combustion engine (1), in particular for a motor vehicle, having an injection valve (8), by means of which fuel can be injected directly into a combustion chamber (4), which is delimited by a piston (2), during a compression phase in a first operating mode and during an induction phase in a second operating mode, having a spark plug (9), which can be used to ignite the fuel which has been injected into the combustion chamber (4), and having a control unit (16), which can be used to control the injection valve (8) and the spark plug (9), **characterized in that** the control unit (16) determines a first interrupt angle (W1) for the injection, which is dependent on the pressure exerted on the fuel to be injected and the pressure in the combustion chamber (3), **in that** the control unit (16) determines a second interrupt angle (W2) for the injection, which is dependent on the ignition angle (ZW), and **in that** the control unit (16) compares (29) the earlier of the two interrupt angles (W1, W2) with the current rotation angle (KW_akt) of the crankshaft (14).

## Revendications

1. Procédé de gestion d'un moteur à combustion interne (1) équipant notamment un véhicule automobile selon lequel le carburant est injecté directement au cours d'un premier mode de fonctionnement pendant la phase de compression et dans un second mode de fonctionnement pendant la phase d'aspiration dans la chambre de combustion (4) délimitée par un piston (2), et le carburant injecté dans la chambre de combustion (4) est allumé, **caractérisé en ce qu'** on détermine (29) pour l'injection un premier angle de coupure (W1) dépendant de la pression exercée par le carburant injecté et celle régnant dans la chambre de combustion (3), on détermine un second angle de coupure (W2) dépendant de l'angle d'allumage (ZW) pour l'injection et on compare le plus ancien des deux angles de coupure (W1, W2) à l'angle de rotation actuel (KW_act) du vilebrequin (14).

2. Procédé selon la revendication 1, **caractérisé en ce que** pour l'injection, le premier angle de coupure (W1) se compose de l'angle de rotation (W_p) du vilebrequin (14) pour lequel la pression (21) dans la chambre de combustion (4) est égale ou supérieure à la pression (pression de la rampe commune) (22) exercée sur le carburant injecté et une distance de sécurité (D_W_p).

3. Procédé selon la revendication 1 ou 2,
   **caractérisé en ce que**
   le second angle de coupure (W2) pour l'injection se compose de l'angle d'allumage (ZW) et de la distance de sécurité (D_ZW).

4. Procédé selon l'une des revendications 1 à 3,
   **caractérisé en ce que**
   dès que l'angle de rotation actuel (KW_act) du vilebrequin (14) est égal ou supérieur à l'angle de coupure (W_ABB) choisi précédemment, on estime (33) que l'injecteur (8) est ouvert.

5. Procédé selon l'une des revendications précédentes,
   **caractérisé par**
   la répétition permanente notamment d'intervalles de temps ou d'angles égaux.

6. Support de commande électrique notamment mémoire morte applicable à un procédé selon l'une des revendications 1 à 5 pour un appareil de commande (16) d'un moteur à combustion interne (1) notamment d'un véhicule automobile contenant un programme déroulé dans un calculateur, notamment un microprocesseur, et permettant l'exécution du procédé selon l'une des revendications 1 à 5.

7. Moteur à combustion interne (1), notamment moteur de véhicule automobile comportant un injecteur (8) pour injecter du carburant selon un premier mode de fonctionnement au cours de la phase de compression et au cours d'un second mode de fonctionnement au cours de la phase d'aspiration, directement dans la chambre de combustion (4) délimitée par un piston (2), comportant une bougie d'allumage (9) pour allumer le carburant injecté dans la chambre de combustion (4) et un appareil de commande (16) pour commander l'injecteur (8) et la bougie d'allumage (9),
   **caractérisé en ce que**
   l'appareil de commande (16) détermine un premier angle de coupure (W1) dépendant de la pression du carburant injecté et de la pression régnant dans la chambre de combustion (3) pour l'injection, l'appareil de commande (16) déterminant un second angle de coupure (W2) pour l'injection, dépendant de l'angle d'allumage (ZW) et l'appareil de commande (16) compare le plus ancien des deux angles de coupure (W1, W2) à l'angle de rotation actuel (KW_act) du vilebrequin (14).

Fig. 1

Eingangsgrößen, z.B. Saugrohrdruck, Drehzahl, Kraftstoffmasse, Ansauglufttemperatur, Motortemperatur ... 20

22

Brennraumdruckmodell 21

Raildruck 22

Ermittlung des Kurbelwinkels W_p mit Raildruck = errechnetem Brennraumdruck 23

Zündwinkel ZW 25

Addition Sicherheitsgröße D_W_p: Abbruchwinkel 1: W1 = W_p + D_W_p 24

Addition D_ZW Sicherheitsgröße bzw. Abschlag für endliche Brenngeschwindigkeit: Abbruchwinkel 2: W2 = ZW + D_ZW 26

Auswahl des früher liegenden Winkels 27

Überprüfung aktueller Kurbelwinkel KW_akt 30

Abbruchwinkel W_ABB 28

29 KW_akt = W_ABB (oder später) ? N

Y

Zustand Einspritzventil (EV) 32

EV geöffnet ? N

31 Y

EV schließen ! 33

Zyklus-ende 34

Fig. 2